# EUROPEAN PATENT APPLICATION

(11) **EP 4 707 996 A1**
(43) Date of publication of application: **11.03.2026**
(21) Application number: 24199092.8
(22) Date of filing: 06.09.2024
(51) Int. Cl.: G06F 3/01, B60W 50/14, G06V 20/59

(54) **AN ADVANCED DRIVER ASSISTANCE SYSTEM AND METHOD**

(71) Applicant: Ford Global Technologies, LLC, Dearborn, MI 48126 (US)
(72) Inventor: GUIMIL REY, Xose, Brentwood, CM14 4JZ (GB); GIMENO FERRER, Daniel, 46007 Valencia (ES)
(74) Representative: HG Law International LLP

(57) **Abstract**

The present disclosure relates to an advanced driver assistance system and method. The system comprises a driver gaze tracking module 104 having a first set of tracking regions for tracking a driver gaze, and each tracking region in the first set is associated with a vehicle component. The driver gaze tracking module 104 receives a vehicle component configuration data and defines a second set of tracking regions corresponding to the vehicle component configuration data. The system and method enable automatic calibration of the driver gaze tracking module according to the vehicle component configuration data.

## Description

### Background

The present disclosure relates to driver tracking. Particularly, but not exclusively, the present disclosure relates to an advanced driver assistance system and method for automatically calibrating a driver gaze tracking module according to the vehicle component configuration data.

### Summary

A modern vehicle typically includes an advanced driver assistance system that can be calibrated for different configurations or variations of the vehicle, e.g., a vehicle with or without a rearview mirror, a center console having a certain screen size, etc. For example, if a driver is looking, e.g., prior to moving to an adjacent lane or pressing on a brake pedal, at the rearview mirror spot where a rearview mirror is installed in the vehicle, the advanced driver assistance system may determine that the driver is focusing on driving and tracking another vehicle e.g., located in the adjacent lane or behind the vehicle. If the driver is looking at the same spot, where no rearview mirror is installed, the advanced driver assistance system may determine that the driver's focus is elsewhere, which potentially poses a threat to the driver and other road users. Currently, the calibration for each vehicle configuration is different and requires manual effort. Different calibrations need to be flashed into the control unit before configuring the advanced driver assistance system. This increases the complexity of a control unit in the plant or at the supplier end. Generally, the vehicle has many calibration configurations, which require manual calibration of each of the components installed in the vehicle. In addition, the configuration of a component installed in the vehicle may vary depending on the operational state, e.g., idle or active, of the component. A need, therefore, exists to provide an advanced driver assistance system and method, to automatically calibrate a driver tracking module according to the vehicle component configuration data.

An object of the present disclosure is to provide an advanced driver assistance system and method of a vehicle for enhancing operations associated with the calibration of the advanced driver assistance system.

An object of the present disclosure is to provide an advanced driver assistance system and method for reducing the complexity of the system and corresponding logic functions.

An object of the present disclosure is to provide an advanced driver assistance system and method that require a one-time calibration for all the configurations and/or variations of the vehicle.

An object of the present disclosure is to provide an advanced driver assistance system and method that are capable of dynamically updating a configuration setting, e.g., depending on an operational state of a component of the vehicle.

According to the system and the method, described herein, there is provided an advanced driver assistance system. The system comprises a driver gaze tracking module having a first set of operational parameters, e.g., a first set of tracking regions, for tracking a driver gaze, each tracking region in the first set is associated with a vehicle component. The driver gaze tracking module receives a vehicle component configuration data. The driver gaze tracking module further defines a second set of operational parameters, e.g., a second set of tracking regions, corresponding to the vehicle component configuration data.

In some examples, the vehicle component configuration data comprises data indicating a set of vehicle components, e.g., windscreen, rearview mirror, one or more side view mirrors, a center console comprising a computing device and a display comprising display elements to access e.g., media applications (e.g., radio app, music OTT service-based app, voice communication app, web mapping platform such as Google Maps^{®}, etc.),etc. installed in a vehicle. External devices (e.g., mobile phones, tablets) can be wirelessly (via a communication network e.g., personal area network) or physically (via a wire) connected to the center console, which allows the user for accessing e.g., media content, media applications whose use is deemed to be compatible with driving and e.g., can assist the driver's navigation or communication with others. In some examples, a vehicle component may be an external device, e.g., a smartphone, configured to interface with a vehicle system, e.g., to provide an additional or alternative function to a vehicle component integrated into the vehicle.

In some examples, the vehicle component configuration data comprises data indicating an operational state (e.g., present or absent, and if present, idle or active) of a set of vehicle components installed in a vehicle.

In some examples, the vehicle component configuration data comprises data indicating a component variant (e.g., side view mirror of a given size and/or shape) selected from a category of components (e.g., side view mirrors of different sizes and shapes).

In some examples, the vehicle component configuration data is received from the vehicle component, that is physically (via a cable) or wirelessly (via a communication network e.g., personal area network) connected to the computing device of the center console.

In some examples, the vehicle component configuration data is received from a remote server, by the computing device of the center console, resulting in the updating of the configuration of each vehicle component.

In some examples, the driver gaze tracking module modifies the first set of tracking regions by modifying the size, position, and/or orientation of at least one tracking region in the first set of tracking regions. The tracking regions are defined by the characteristics (e.g., size, shape, position relative to the driver's head, orientation relative to the driver's head, etc.) of the vehicle components.

In some examples, the driver gaze tracking module modifies the first set of tracking regions by removing at least one tracking region from the first set of tracking regions e.g., when a vehicle component is either absent (e.g., due to the removal of the vehicle component) or idle (e.g., if the vehicle component has been turned off or has limited functionality). In some examples, the driver gaze tracking module modifies the first set of tracking regions by adding at least one tracking region to the first set of tracking regions e.g., when a vehicle component has become active (e.g., the vehicle component has been turned on, or added following the upgrading of a vehicle then turned on).

In some examples, the driver gaze tracking module determines a third set of tracking regions defined by a difference between the first set of tracking regions and the second set of tracking regions. Further, the driver gaze tracking module determines a time duration for which the driver gaze is held within a tracking region of the third set of tracking regions and issues a notification (e.g., an audio and/or visual notification) when the determined time duration is greater than a first-time threshold. In some examples, when the duration during which the driver gaze is held within a tracking region of the third set of tracking regions exceeds the first time threshold, the computing device of the center console pauses any audio activity and reads out (e.g., while stopping any audio activity) a message such as "*please, focus on the road*". Additionally or alternatively, the computing device of the center console pauses any visual activity and/or displays a message such as "*please, focus on driving*"*.* In some examples, the first-time threshold is determined based on the driving habits of the driver, e.g., which may be accessed from a driver profile, containing data relating to the historic operation and/or use of the vehicle. In some examples, the first-time threshold is determined based on the driving habits of a plurality of drivers having common characteristics (e.g., age, gender, visual acuity, etc.).

In some examples, the vehicle component includes a side view mirror, a central mirror, an instrument cluster, a heads-up display, a climate control system, or an infotainment system.

In some examples, the vehicle comprises an advanced driver tracking system.

According to the system and the method, described herein, a method is provided. The method comprises tracking, a driver gaze corresponding to a first set of tracking regions, wherein each tracking region in the first set is associated with a vehicle component; receiving, a vehicle component configuration data; and defining, a second set of tracking regions corresponding to the vehicle component configuration data.

In some examples, the first set of tracking regions comprises tracking regions wherein each tracking region is associated with a vehicle component from a first plurality of vehicle components corresponding to a maximum number of vehicle components, and wherein each tracking region is the largest possible tracking region associated with a vehicle component from the first plurality. In some examples, the first set of tracking regions corresponds to a default set of tracking regions associated with a vehicle component configuration in which the driver tracking cameras are to be the most active as they are covering the largest area: this configuration is called 'default vehicle component configuration'. In some examples, the second set of tracking regions corresponds to a subset of the default set of tracking regions. Hereby, driver tracking cameras simply need to be calibrated once using the 'default vehicle component configuration' corresponding to the default set of tracking regions and this calibration is also valid for all the other possible vehicle component configurations corresponding to all the other possible variations of vehicles. Then, the vehicle component configuration of a given vehicle is updated based on the vehicle component configuration data of interest, which may result in the removal or modification of one or more tracking regions from the default set of tracking regions. The method and system provided in the present disclosure thus require to calibrate the driver tracking cameras only for the 'default vehicle component configuration' and do not require to calibrate the driver tracking cameras for each other possible variations of vehicles, which allows for enhanced, e.g., more efficient, configuration of vehicle components.

In some examples, the method further comprises determining a third set of tracking regions defined by a difference between the first set of tracking regions and the second set of tracking regions; determining a time duration for which the driver gaze is held within a tracking region of the third set of tracking regions; and issuing a notification when the determined time duration is greater than a first-time threshold.

In some examples, the vehicle component configuration data comprises data indicating a second-time threshold for which the driver gaze is held within a tracking region of the second set of tracking regions; and the method further comprises: determining a time duration for which the driver gaze is held within a tracking region of the second set of tracking regions; and issuing a notification when the determined time duration is greater than the second-time threshold.

In some examples, the second-time threshold is determined based on the driving habits of the driver. In some examples, the second-time threshold is determined based on the driving habits of a plurality of drivers having common characteristics (e.g., age, gender, visual acuity, etc.).

According to the system and the method, described herein, there is provided a self-configuring driver tracking system of a vehicle. The system comprises a driver tracking module and a control module. The control module is communicatively coupled with the driver tracking module. The control module identifies at least one active component in the vehicle. The control module retrieves the characteristics of the identified active component. The control module calibrates the driver tracking module based on a pre-defined tracking region and the retrieved characteristics of the identified active components.

In some examples, the driver gaze tracking module obtains an eye-tracking data of a driver.

In some examples, the driver tracking module is calibrated based on the pre-defined tracking region, the retrieved characteristics of the active components, and the eye-tracking data of the driver.

In some examples, the at least one active component is communicatively coupled with the control unit to transmit the characteristics.

In some examples, the characteristics of the active component include at least one of size, position, and orientation data.

In some examples, the active component includes a side view mirror, a central mirror, or an infotainment system.

According to the system and the method, described herein, a method is provided. The method comprises identifying at least one active component in the vehicle, retrieving characteristics of the identified active component, and calibrating a driver tracking module based on a pre-defined tracking region and the retrieved characteristics of the active component.

In some examples, the method further comprises obtaining eye-tracking data of a driver using the driver tracking module.

In some examples, calibrating further comprises calibrating the driver tracking module based on the pre-defined tracking region, the retrieved characteristics of the active components, and the eye-tracking data of the driver.

In some examples, the method comprises inputting the pre-defined tracking region using at least one human-machine interface.

### Brief Description of the Drawings

The above and other objects and advantages of the disclosure will be apparent upon consideration of the following detailed description, taken in conjunction with the accompanying drawing, in which like reference characters refer to like parts throughout, and in which:
FIG. 1(a) illustrates an advanced driver assistance system, in accordance with some examples of the present disclosure;
FIG. 1(b) illustrates a driver gaze tracking module, in accordance with some examples of the present disclosure;
FIG. 1(c) illustrates vehicle components present inside the vehicle, in accordance with some examples of the present disclosure;
FIG. 1(d) illustrates a control module, in accordance with some examples of the present disclosure;
Fig. 1(e) illustrates a first set of tracking regions, in accordance with some examples of the present disclosure;
Fig. 1(f) illustrates a second set of tracking regions and a third set of tracking regions, in accordance with some examples of the present disclosure;
FIG. 2 illustrates a vehicle comprising an advanced driver assistance system, in accordance with some examples of the present disclosure;
FIG. 3(a) illustrates a flowchart of a method for an advanced driver assistance, in accordance with some examples of the present disclosure; and
FIG. 3(b) illustrates a flowchart of a method for an advanced driver assistance, in accordance with some examples of the present disclosure.

### Detailed Description

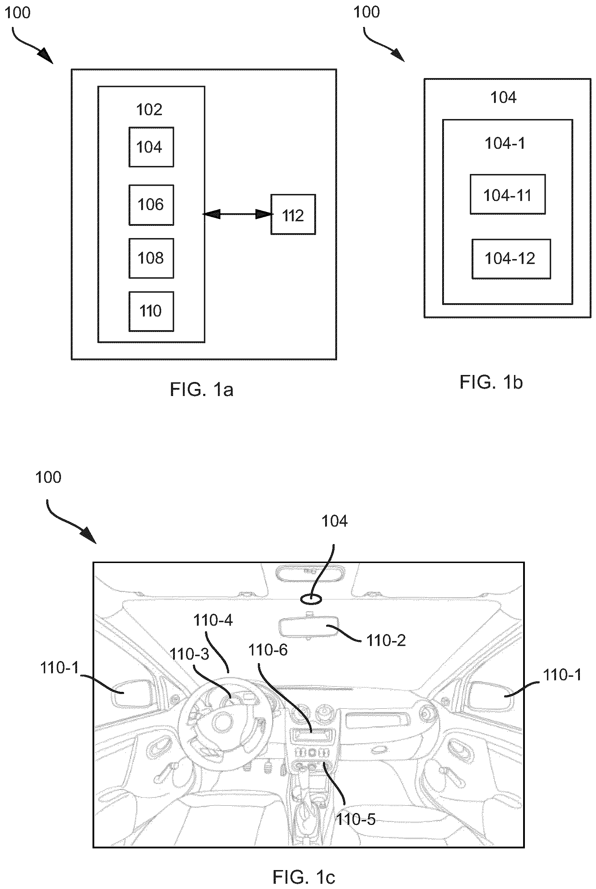

FIG. 1(a) illustrates an advanced driver assistance system 100. The system 100 includes a vehicle 102, and a human-machine interface module 112. in the example shown in FIG. 1(a), the vehicle 102 includes a driver gaze tracking module 104, a control module 106, a memory module 108, and at least one vehicle component 110.

The vehicle 102 may be any of the vehicles known in the art, such as a car, a van, a motorcycle, a marine vessel, an aircraft, etc. The vehicle 102 may have the structures and features of any vehicle known in the art including wheels, a drive train coupled to the wheels, an motor coupled to the drive train, a steering system, a braking system, and other systems known in the art to be included in the vehicle 102.The advanced driver assistance system 100 may be configured to assist a driver in the operation of such structures and features, e.g., by providing an instruction, alert or notification, and/or by providing a level of autonomous control of such structures and features. In some examples, the vehicle may be an electric vehicle, such as a battery electric vehicle (BEV), a hybrid electric vehicle, a plug-in hybrid electric vehicle, a fuel cell electric vehicle, etc. In some examples, the advanced driver assistance system 100 is configured to define, e.g., automatically, a set of operational parameters of the advanced driver assistance system 100, e.g., based on a default set of operational parameters and vehicle component configuration data, as described in further detail below. In some examples, the automatic

The driver gaze tracking module 104 includes at least an optical sensor 104-1 (as shown in FIG. 1(a)). The optical sensor 104-1 may include, but is not limited to, a camera 104-11, a depth sensor 104-12, or a combination thereof. The optical sensor 104-1 captures an image , e.g., an image stream, of the eyes of a driver/eye tracking data or an interior field of view of the vehicle 102. Additionally or alternatively, the optical sensor 104-1 may capture face, expression, or body characteristics of the driver, such as biometric data. The optical sensor 104-1 may detect pupil dilation in the driver's eye to determine the gaze direction of the driver. Various approaches are known in the art for determining the gaze of the driver. In one example, modern computer vision techniques such as neural networks may be used to determine the driver's gaze direction. The optical sensor 104-1 may also identify objects viewed by the driver in a three-dimensional scene. The driver gaze tracking module 104 may further include, but is not limited to an encoder, or cryptographic module, or a combination thereof to convert the captured image into one or more signals. The one or more signals are encoded or encrypted for secure transmission.

The driver gaze tracking module 104 may include a communication module. The communication module supports at least one of a wired or a wireless communication protocol. The at least one wired communication protocol may include but is not limited to an ethernet (IEEE 802.3), a local interconnect network (LIN), a controller area network (CAN), a media-oriented system transport (MOST), or a flex ray. The at least one wireless communication protocol may include but is not limited to radio frequency (RF), infrared (IrDA), Bluetooth, ZigBee (and other variants of the IEEE 802.15 protocol), a wireless fidelity WiFi or IEEE 802.11 (any variation), IEEE 802.16 (WiMAX or any other variation), direct sequence spread spectrum (DSSS), frequency hopping spread spectrum (FHSS), global system for mobile communication (GSM), general packet radio service (GPRS), enhanced data rates for GSM Evolution (EDGE), long term evolution (LTE), cellular protocols (2G, 2.5G, 2.75G, 3G, 4G or 5G), near field communication (NFC), satellite data communication protocols, or any other protocols for wireless communication.

The driver gaze tracking module 104 may be communicatively coupled with the vehicle 102, e.g., integrated within the vehicle 102 (as shown in FIG. 1(a)), or provided as a separate and connected module. The driver gaze tracking module 104 may be coupled with a control module 106, and a memory module 108. The control module 106 may be any commercially available processor or a cloud system. The control module 106 can also be implemented as a digital signal processor (DSP), a controller, a microcontroller, a designated system on chip (SoC), an integrated circuit implemented with a field programmable gate array (FPGA), an application-specific integrated circuit (ASIC), or a combination thereof.

Additionally or alternatively, the control module 106 may be located remotely and is communicatively coupled to the driver gaze tracking module 104. The remote configuration of the control module 106 provides a technical solution for reducing the burden of complex operations on the vehicle 102, enabling distributed computing, providing better accessibility, enhancing scalability, enabling efficient collaboration, or upgrading productivity. This enhancing the overall performance of the vehicle 102 and systems associated with the vehicle, such as operation and control of a fleet of vehicles.

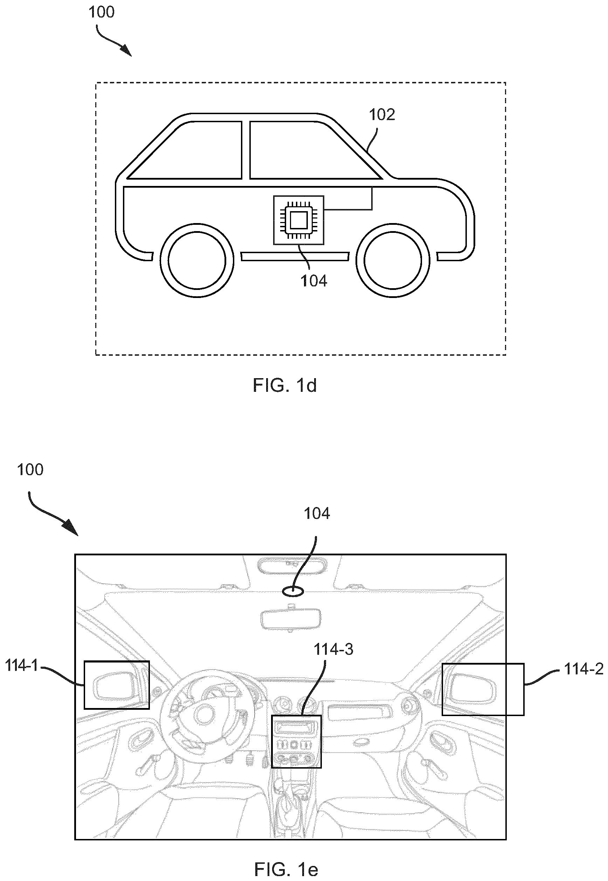

The driver gaze tracking module 104 is communicatively coupled with a set of vehicle components 110. The driver gaze tracking module 104 may fetch a pre-stored set of instructions stored in the memory module 108. The memory module 108 may also store the set of vehicle components 110, a set of tracking regions, and the vehicle component configuration data. The memory module 108 may also store a data structure for storing a pre-defined first set of tracking regions (114-1, 114-2, 114-3) corresponding to the set of vehicle components 110, as shown in Fig. 1(e). For the sake of clarity, FIG. 1(e) shows three tracking regions (114-1, 114-2, 114-3) corresponding respectively to a driver's side side-view mirror, an instrument panel in a center console of the vehicle 102 and a passenger's side side-view mirror. However, the present disclosure may encompass any appropriate tracking region. For example, although not shown, the first set of tracking regions may comprise a plurality of tracking regions each being associated with a vehicle component that could possibly be supplied as part of the vehicle 102 by a manufacturer of the vehicle 102. For example, the first set of tracking regions may comprise a plurality of tracking regions accounting for a range, e.g., a full range, of optional (e.g., selectable) vehicle components 110 offered by the manufacturer of the vehicle. The pre-defined first set of tracking regions (114-1, 114-2, 114-3) includes but is not limited to the coordinates, location, orientation, dimension/size of the vehicle components, or a combination thereof. The gaze direction and features detected using the optical sensor may be stored in the memory module 108 for further use. In one example, the driver gaze tracking module 104 may communicatively couple with the memory module 108 to store the gaze data and characteristics that can be used later to enhance the system(s) 100 capabilities. The memory module 108 may further include the at least one volatile memory elements (for example, random access memory, such as DRAM, SRAM, SDRAM, etc.), non-volatile memory elements (for example, ROM, hard drive, etc.), other storage media or combinations thereof. The memory module 108 may have a distributed architecture, where various components are situated remotely from one another but can be accessed by the driver gaze tracking module 104. The pre-stored set of instructions in the memory module 108 can include one or more software programs, and algorithms, each of which includes an ordered listing of executable instructions for implementing logical functions.

The driver gaze tracking module 104 receives the vehicle component configuration data from the memory module 108. The vehicle component configuration data comprises data indicating the set of vehicle components 110 installed in the vehicle 102. For example, the vehicle component configuration data may comprise data relating to a set of vehicle components 110 that have been fitted to the vehicle, e.g., as part of or acceding to an order by a customer for a particular configuration of vehicle. In some examples, one customer may order a vehicle having a standard display unit having a first associated size and position in the instrument panel of the vehicle 102, while another customer may order a vehicle having an upgraded display unit having a second associated size and position in the instrument panel of the vehicle 102. Additionally or alternatively, the vehicle component configuration data comprises data indicating an operational state of the set of vehicle components 110 installed in the vehicle 102. For example, the vehicle component configuration data may comprise data relating to whether a vehicle component is turned on or turned off, an operational mode of a vehicle component (e.g., a display state of a digital instrument cluster, or a use mode of an infotainment system, such as navigational mode versus music library mode), and/or a positional state of the vehicle component (e.g., an angled position of a side-view mirror, or a rotational position of a display screen). The vehicle component configuration data comprises data indicating a component variant selected from a category of components 110. For example, the vehicle component configuration data may comprise data relating to a model or type of vehicle component selected from multiple variants within a category of components. For example, a model number of a display screen may update between years of production, which may indicate a change in an operational parameter, such as an operating voltage, of the component. In some examples, one variant of a component may comprise or lack a certain feature, such as a USB port, a sensor, etc.

The driver gaze tracking module 104 may be communicatively coupled to the at least one vehicle component from the set of vehicle components 110 to receive the vehicle component configuration data. Additionally or alternatively, the driver gaze tracking module 104 may receive the vehicle component configuration data from a remote server (not shown).

The vehicle component 110 may be any appropriate type of component installed to (or at least operationally couplable to) the vehicle 102. For example, a set of different vehicle components 110 may include but is not limited to side view mirror(s) 110-1, central mirror 110-2, instrument cluster 110-3, heads up display 110-4, climate control system 110-5, or an infotainment system 110-6. Other vehicle components may include a steering wheel, a cup holder, a switch, a handle, a door or cover to a storage compartment, a vent, a light, a sun visor, a blind, a seat control, a gear selector, an electrical port (e.g., a USB port), and/or any other appropriate type of vehicle component. In some examples, the vehicle component may be a standalone device operationally coupled to the vehicle, such as smartphone or navigation system. In some examples, the position of the vehicle component may be variable. For example, when the vehicle component is a smartphone, there are multiple different locations and orientations in which the smartphone may be located and orientated in the vehicle, such on a holder attached to the windscreen versus a holder attached to a vent. In some examples, the vehicle may comprise an imaging system configured to determine the position and/or orientation of the vehicle component, and store the position and/or orientation of the vehicle component as vehicle component configuration data. In some examples, the vehicle component configuration data may be updated, e.g., dynamically or periodically, during operation of the vehicle, e.g., as an operational state of a vehicle component changes (e.g., mode 1 to mode 2), as a position of a vehicle component changes, etc.

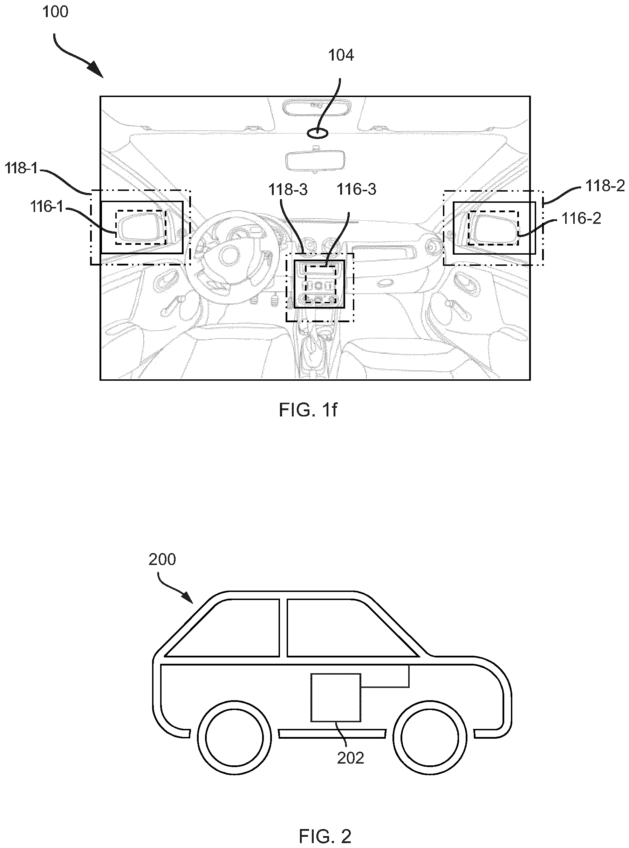

The driver gaze tracking module 104 is configured to define a second set of tracking regions (116-1, 116-2, 116-3) based on the vehicle component configuration data, as shown in Fig. 1(f). For example, the driver gaze tracking module 104 may be configured to modify the first set of tracking regions (114-1, 114-2, 114-3) by modifying the size, position, and/or orientation data of at least one tracking region in the first set of tracking regions (114-1, 114-2, 114-3), e.g., based on size, position, and/or orientation of the vehicle components from which respective tracking regions (114-1, 114-2, 114-3) are derived. In some examples, the driver gaze tracking module 104 removes at least one tracking region from the first set of tracking regions (114-1, 114-2, 114-3), e.g., based on a corresponding vehicle component not being installed (e.g., operationally coupled) to the vehicle or being in a particular operational state, e.g., an inactive state.

The driver gaze tracking module 104 may further receive the eye-tracking data of the driver from the at least one optical sensor 104-1. The driver gaze tracking module 104calibrates calibrates the size, position, and/or orientation of the at least one tracking region based on the pre-defined first set of tracking regions (114-1, 114-2, 114-3), the vehicle component configuration data, and the eye-tracking data of the driver.

The driver gaze tracking module 104 determines a third set of tracking regions (118-1, 118-2, 118-3) defined by a difference between the first set of tracking regions (114-1, 114-2, 114-3) and the second set of tracking regions (116-1, 116-2, 116-3), as shown in Fig. 1(e). Further, a drive gaze tracking module 104 determines a time duration for which the driver gaze is held within a tracking region of the third set of tracking regions (118-1, 118-2, 118-3) and issues a notification when the determined time duration is greater than a first-time threshold.

The vehicle component configuration data comprises data indicating a second-time threshold for which the driver gaze is held within a tracking region of the second set of tracking regions (116-1, 116-2, 116-3). The driver gaze tracking module 104 determines a time duration for which the driver gaze is held within a tracking region of the second set of tracking regions (116-1, 116-2, 116-3) and issues a notification when the determined time duration is greater than the second-time threshold.

The first and the second-time thresholds may be pre-stored in the memory module 108. Additionally or alternatively, the first and second-time thresholds may be defined or inputted by the driver or operator. In one example, the value of the first and second thresholds may include but is not limited to 3 seconds, 5 seconds, 10 seconds, 15 seconds, or 30 seconds.

The human-machine interface 112 includes displays or voice commands, for example, a combination meter, a center information display, an instrument cluster, a mobile phone, and a head-up display. The human-machine interface 112 may further include an audio system and an infotainment system. The human-machine interface 112 receives an input from the driver of the vehicle 102 or presents or outputs the notification to the driver of the vehicle 102. The human-machine interface 112 further comprises inputting the pre-defined first set of tracking regions (114-1, 114-2, 114-3) into the system 100.

The system 100 may include an alert module (not shown). The alert module may include but is not limited to, human-machine interface 112 as discussed above, embedded displays, haptic feedback devices, lights, speakers, wired or wirelessly connected devices with the vehicle 102, or any other possible combination thereof. The alert module may be communicatively coupled with the driver gaze tracking module 104 to alert or notify the driver when the driver's focus is other than the defined gazing area. The alert module may display a notification and/or change the lights of the vehicle 102 for example, dashboard lighting, console lighting, ambient light, infotainment system lights, play a sound via speakers to alert the driver, send haptic alerts, or send notifications over the connected devices. The alert module may further communicate with nearby vehicles and alert the driver of another vehicle.

The alert module may further alert the driver based on road signs, such as "no overtaking," "no crossing over a lane marking line on the right for overtaking" "sounding horn," and "road segment for sounding horn". Examples further include road markings such as "no stopping region", or "restricted region", "channelized zone (zebra zone or buffer zone)", "no overtaking".

In one example, if the driver is gazing at the vehicle component 110 within the at least one tracking region for at least 3 seconds and the vehicle component 110 is present in the vehicle 102, the driver gaze tracking module 104 determines that the driver is focused on the driving, e.g., by virtue of the driver looking at a region in the vehicle associated with a component fitted to the vehicle, such as a side-view mirror. In another example, if the driver is gazing at a tracking region associated with the vehicle component 110 for at least 3 seconds and the vehicle component 110 is not present in the vehicle 102, the driver gaze tracking module 104 identifies that the driver is not focused on the driving and issues a notification to the driver using a human-machine interface 112. For example, where a side-view mirror is not fitted to a vehicle, and the driver is gazing at the location where the side-view mirror would be should it be fitted to the vehicle, then the driver gaze tracking module 104 determines that the driver is not focused on driving the vehicle, or is carrying out another task, such as operating a smartphone.

FIG. 2 illustrates a vehicle 200 comprising an advanced driver assistance system 202, in accordance with some examples of the present disclosure. The structure and the functionality or operation of the advanced driver assistance system 202 are the same as discussed above in FIG. 1(a) to FIG. 1(e).

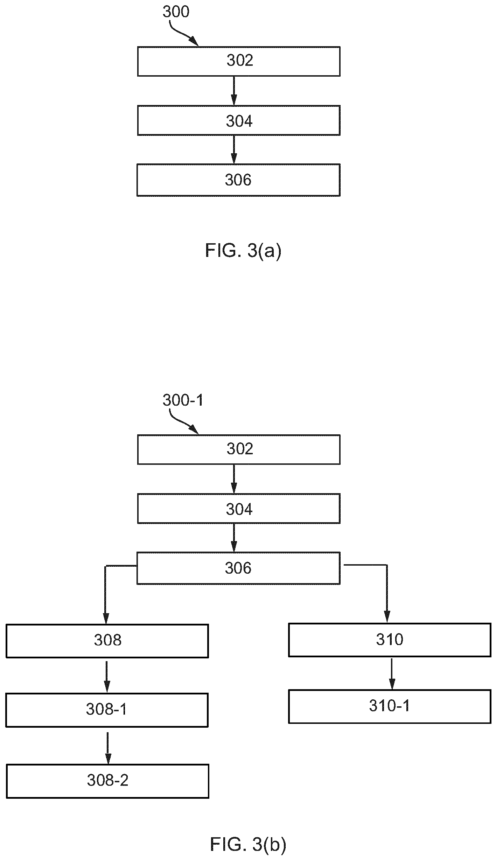

FIG. 3(a) illustrates a flowchart of a method 300 for advanced driver assistance, in accordance with some examples of the present disclosure. The method 300 comprises steps of tracking 302, a driver gaze corresponding to a first set of tracking regions, wherein each tracking region in the first set is associated with a vehicle component; receiving 304, a vehicle component configuration data; and defining 306, a second set of tracking regions corresponding to the vehicle component configuration data. It should be noted that the method in FIG. 3, or any step thereof, could be performed on, or provided by, any of the system shown in FIGS. 1 to 1(c).

FIG. 3(b) further illustrates a flowchart of a method 300-1 for an advanced driver assistance, in accordance with some examples of the present disclosure. As discussed in FIG. 3(a), after following the steps of tracking 302, receiving 304, and defining 306, the method 300-1 further follows at least one of step 308 or step 310. The step 308 comprises determining a third set of tracking regions defined by a difference between the first set of tracking regions and the second set of tracking regions, followed by the step of determining 308-1 a time duration for which the driver gaze is held within a tracking region of the third set of tracking regions, and issuing 308-2 a notification when the determined time duration is greater than a first-time threshold.

The vehicle component configuration data comprises data indicating a second-time threshold for which the driver gaze is held within a tracking region of the second set of tracking regions. The step 310 comprises determining a time duration for which the driver gaze is held within a tracking region of the second set of tracking regions and issuing 310-1 a notification when the determined time duration is greater than the second-time threshold.

The above-stated descriptions are merely examples of implementations of this application but are not intended to limit the protection scope of this application. A person with ordinary skills in the art may recognize substantially equivalent structures or substantially equivalent acts to achieve the same results in the same manner or in a dissimilar manner; the exemplary embodiment should not be interpreted as limiting the disclosure to one embodiment.

While aspects of the present disclosure have been described in detail with reference to the illustrated embodiments, those skilled in the art will recognize that many modifications may be made thereto without departing from the scope of the present disclosure. The present disclosure is not limited to the precise construction and compositions disclosed herein; any and all modifications, changes, and variations apparent from the foregoing descriptions are within the spirit and scope of the disclosure as defined in the appended claims. Moreover, the present concepts expressly include any and all combinations and sub-combinations of the preceding elements and features.

The description is provided for clarification purposes and is not limiting. Words and phrases are to be accorded their ordinary, plain meaning unless indicated otherwise.

## Claims

1. An advanced driver assistance system comprising:
a driver gaze tracking module having a first set of tracking regions for tracking a driver gaze, each tracking region in the first set is associated with a vehicle component; and
wherein the driver gaze tracking module is configured to:
receive a vehicle component configuration data; and
define a second set of tracking regions corresponding to the vehicle component configuration data.

2. The system of claim 1, wherein the vehicle component configuration data comprises data indicating a set of vehicle components installed in a vehicle.

3. The system of claim 1 or 2, wherein the vehicle component configuration data comprises data indicating an operational state of a set of vehicle components installed in a vehicle.

4. The system of any preceding claim, wherein the vehicle component configuration data comprises data indicating a component variant selected from a category of components.

5. The system of any preceding claim, wherein the vehicle component configuration data is received from the vehicle component.

6. The system of any preceding claim, wherein the vehicle component configuration data is received from a remote server.

7. The system of any preceding claim, wherein the driver gaze tracking module is configured to modify the first set of tracking regions by modifying the size, position, and/or orientation of at least one tracking region in the first set of tracking regions.

8. The system of any preceding claim, wherein the driver gaze tracking module is configured to modify the first set of tracking regions by removing at least one tracking region from the first set of tracking regions.

9. The system of any preceding claim, wherein the driver gaze tracking module is configured to:
determine a third set of tracking regions defined by a difference between the first set of tracking regions and the second set of tracking regions;
determine a time duration for which the driver gaze is held within a tracking region of the third set of tracking regions; and
issue a notification when the determined time duration is greater than a first-time threshold.

10. The system of any preceding claim, wherein the vehicle component configuration data comprises data indicating a second-time threshold for which the driver gaze is held within a tracking region of the second set of tracking regions; and wherein the driver gaze tracking module is configured to:
determine a time duration for which the driver gaze is held within a tracking region of the second set of tracking regions; and
issue a notification when the determined time duration is greater than the second-time threshold.

11. The system of any preceding claim, wherein the vehicle component includes a side view mirror, a central mirror, an instrument cluster, a heads-up display, a climate control system, or an infotainment system.

12. A vehicle comprising the advanced driver assistance system of any preceding claim.

13. A method for an advanced driver assistance comprising:
tracking, a driver gaze corresponding to a first set of tracking regions, wherein each tracking region in the first set is associated with a vehicle component; and
receiving, a vehicle component configuration data; and
defining, a second set of tracking regions corresponding to the vehicle component configuration data.

14. The method of claim 13, wherein the method further comprises:
determining a third set of tracking regions defined by a difference between the first set of tracking regions and the second set of tracking regions;
determining a time duration for which the driver gaze is held within a tracking region of the third set of tracking regions; and
issuing a notification when the determined time duration is greater than a first-time threshold.

15. The method of claim 13 or 14, wherein the vehicle component configuration data comprises data indicating a second-time threshold for which the driver gaze is held within a tracking region of the second set of tracking regions; and the method further comprises:
determining a time duration for which the driver gaze is held within a tracking region of the second set of tracking regions; and
issuing a notification when the determined time duration is greater than the second-time threshold.
